# EUROPEAN PATENT SPECIFICATION

(11) **EP 2 898 593 B1**
(45) Date of publication and mention of the grant of the patent: **02.08.2017**
(21) Application number: 13801732.2
(22) Date of filing: 13.09.2013
(51) Int. Cl.: H02K 11/02, F04D 25/08, F04D 19/00, F04D 25/06, F01P 5/02, F04D 29/08, F04D 29/52

(54) **VENTILATION UNIT**
LÜFTUNGSEINHEIT
UNITÉ DE VENTILATION

(30) Priority: 20.09.2012 IT BO20120499
(43) Date of publication of application: 29.07.2015
(73) Proprietor: SPAL Automotive S.r.l., 42015 Correggio (IT)
(72) Inventor: DE FILIPPIS, Pietro, I-17019 Varazze (IT)
(74) Representative: Puggioli, Tommaso
(86) International application number: PCT/IB2013/058544
(87) International publication number: WO 2014/045179

(56) References cited:
- EP-A1- 1 000 783
- DE-A1-102010 039 142
- US-A- 4 578 605
- US-B2- 7 811 069

## Description

### Technical field

This invention relates to a ventilation unit and to a shroud forming part of the ventilation unit.

The ventilation unit referred to in this specification is intended mainly for automotive applications, for cooling radiators and the like in motor-cars, lorries or the like.

### Background art

Recent advances in automotive manufacturing have led to a considerable increase in the number of parts - which occupy more and more space-housed in the engine compartment of vehicles.

Moreover, on account of on-going technological developments, with a view to reducing fuel consumption and vehicle emissions, large quantities of heat need to be removed from the radiant masses in the engine compartments of vehicles.

To this must be added the fact that the engine compartment houses packs of radiators placed one in front of another to perform different functions.

Consider for example that the engine compartment may contain a water radiator, small radiators for the engine oil, for the air conditioning system, for the transmission, for cooling the catalytic converter, and others still, resulting in load losses along the radiator circuit.

In practice, the ventilation units are usually mounted between the engine and the radiators in more and more confined spaces and therefore must necessarily be as compact as possible but capable of generating powerful air flows.

The top surface dimensions of the electric fans, and thus of the ventilation units comprising them, are defined and, in practice, fixed by the dimensions of the radiator to be cooled, whilst the axial dimensions are determined by the axial dimensions of the electric motor.

To meet the requirements of high performance in confined spaces, prior art ventilation units tend to be either too large or too low-performing.

Document US4578605 discloses an electric motor with a system for speed monitoring comprising a detector housed in a spoke of the shroud of the motor.

Document DE102010039132 discloses a ventilation unit wherein an electronic system driving the motor is at least in part housed outside the casing of the motor in a dedicated compartment.

### Disclosure of the invention

In this context, the main purpose of this invention is to overcome the above mentioned disadvantages.

One aim of the invention is to propose a ventilation unit whose dimensions are reduced compared to the prior art solutions.

Another aim is to propose a ventilation unit which is efficient in terms of fluid dynamics and control.

The stated technical purpose and aims are substantially achieved by a ventilation unit according to claim 1.

### Brief description of drawings

Further features and advantages of the present invention are more apparent in the detailed description below, with reference to a preferred, non-limiting, embodiment of a ventilation unit, as illustrated in the accompanying drawings, in which:
- Figure 1 is a schematic perspective view, partly exploded, of a ventilation unit according to the invention;
- Figure 2 is a schematic plan view of the ventilation unit of Figure 1;
- Figure 3 is a schematic cross-section through line III - III in Figure 2.

### Detailed description of the preferred embodiments of the invention

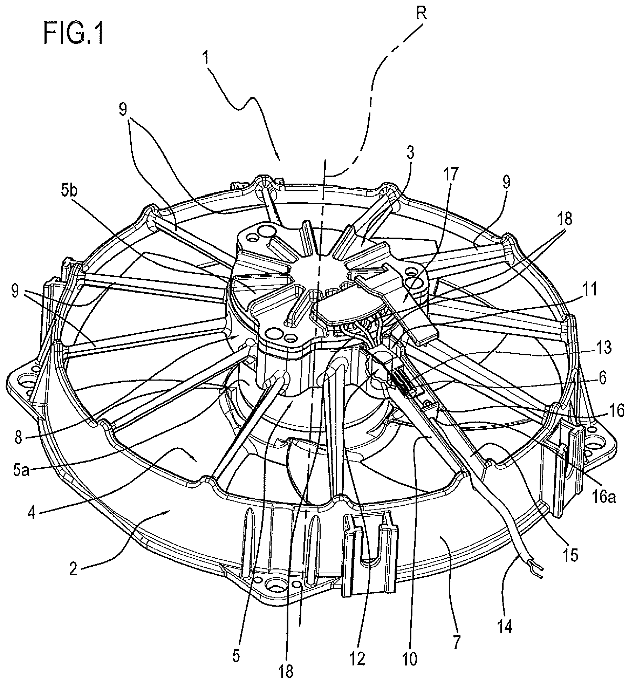

With reference to the accompanying drawings, in particular Figure 1, the numeral 1 denotes a ventilation unit according to this invention.

The ventilation unit 1 comprises an electric fan and a shroud 2 supporting the electric fan.

The electric fan basically comprises an electric motor 3 and an axial fan 4 driven by the electric motor 3 and having an axis of rotation R.

The electric motor 3, preferably a brushless motor with integrated electronic circuitry, and the fan 4 are described only insofar as necessary for defining and understanding this invention.

The electric motor 3 which drives the fan 4 comprises a casing 5a, a cap 5b coupled to the casing 5a to form a sealed enclosure 5 and, as mentioned, an electronic system 6 for the selfsame motor 3.

The electronic system 6 comprises electronic components of substantially known type and is partly housed in the enclosure 5.

In other words, according to the invention, the electronic control system 6 for the electric motor 3 is located partly inside of the enclosure 5 and partly outside of it, that is to say, it comprises electronic components mounted inside the motor 3 and other electronic components mounted outside the motor 3, as explained in more detail below.

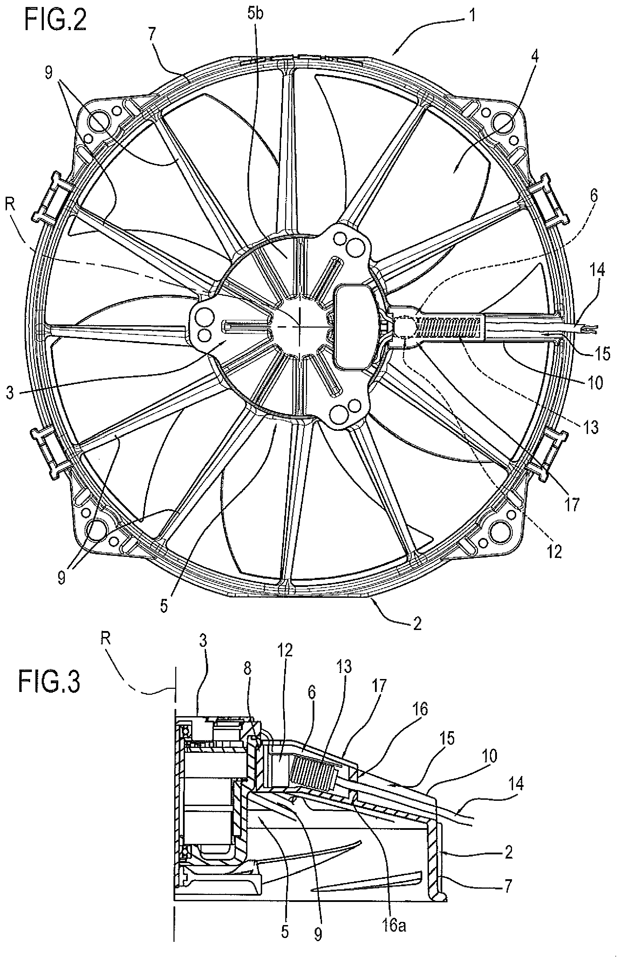

With reference in particular to Figures 1 and 3, the reference numeral 6 denotes, for simplicity, the part of the electronic system located outside the motor 3.

The shroud 2, also described only insofar as necessary for defining and understanding the invention, supports the electric fan by means of the motor 3.

The shroud 2 comprises an outer frame 7, which in the example illustrated is substantially cylindrical in shape, and which, generally speaking, is fixable to a vehicle, that is to say, is used to mount the ventilation unit 1 to a generic vehicle.

The shroud 2 comprises a fastening element 8 for fixing the motor 3.

The fastening element 8 is in the form of a collar and is on the inside of the outer frame 7 and coaxial therewith.

In other words, the collar 8 is closer to the axis R than the outer frame 7.

The shroud 2 comprises a plurality of spokes 9 connecting the outer frame 7 to the fastening element 8.

As illustrated, the spokes 9 comprise a spoke 10 with a compartment 11 for housing part of the electronic control system 6 for the electric motor 3.

In practice, the spoke 10 comprises housing means for electronic components 12, 13 which form part of the electronic system 6 and which, as mentioned, are mounted on the outside of the enclosure 5 of the motor 3. More precisely, in the example illustrated, the components mounted outside the enclosure 5 are an electrolytic filter capacitor 12 and a filter inductor 13, that is, electronic filter components.

The electrolytic capacitors normally forming part of the electronic circuitry integrated in brushless motors are, together with filter inductors, much larger than all the other components and placing them outside the enclosure 5 advantageously allows the dimensions of the enclosure to be reduced.

In practice, electrolytic capacitors and inductors are in the order of twenty or more millimetres in size, whilst the other components are just a few millimetres in size.

Also, placing them outside the casing facilitates cooling of the components 12 and 13 because it exposes them to ambient temperature and not to the operating temperature inside the motor, which is much higher also on account of all the other power components.

In the preferred embodiment illustrated, the housing compartment 11 is formed directly in the spoke 10.

More precisely, the spoke 10 itself defines a housing which comprises the compartment 11.

In the embodiment illustrated, the spoke 10 is also shaped in such a way as to define a housing for a power cable 14 of the motor 3.

In other words, the housing defined by the spoke 10 comprises the compartment 11.

With reference in particular to Figure 3, it may be observed that the compartment 11 is located near the inner collar 8.

Thus, the compartment 11 does not reduce the performance of the fan 4.

In effect, the axial fan 4, being of axial type, is most effective at its outer half, towards the frame 7. Thus, placing the compartment 11, and hence the components 12, 13 it houses, near the collar 8, is also advantageous from the fluid dynamic viewpoint since the effect produced on the flow generated by the operation of the fan is negligible.

In addition, the electrolytic capacitor 12 in particular is housed in the compartment 11 and placed near the power components inside the enclosure 5. That way, the connecting inductance created by the connecting cables 18 extending between the power components inside the motor and the capacitor 12 outside it is negligible and does not create disturbances at high frequencies.

With reference in particular to Figures 1 and 3, it may be observed that the compartment 11 extends mainly in a direction parallel to the axis of rotation R, transversal to the main direction of extension of the spoke 10. Advantageously, the capacitor 12 is mounted in the compartment 11 in such a way that its main direction of extension is parallel to the main direction of extension of the compartment 11 itself.

As illustrated, the main directions of extension of the electrolytic capacitor 12 and of the compartment 11 are both parallel to the axis of rotation R of the fan 4.

Along that axis of rotation the size of the compartment 11 is comparable to the size of the collar 8 along the same axis of rotation so as to maximize the capacity of the selfsame compartment 11.

With reference to the inductor 13, it may be observed that the inductor is mounted in the spoke 10 in such a way that its main direction of extension is parallel to the main direction of extension of the selfsame spoke 10.

The spoke 10 extends between the collar 8 and the frame 7 and has a grooved profile or groove 15 which defines the housing for the components 12 and 13 and for the passage of the power cable 14.

Near the collar 8 the groove 15 widens to form the compartment 11 in which the capacitor 12 is preferably mounted.

A closing partition 16 is provided in the groove 15, between the collar 8 and the frame 7.

The partition 16 has an opening 16a allowing the cable 14 to pass through. The electronic components 12 and 13 are mounted in the spoke 10 between the collar 8 and the partition 16.

The power cable 14 leads out of the enclosure 5 into the spoke 10 and through the partition 16 and is free to be connected to a power source not illustrated.

The ventilation unit 1 comprises a cover 17 which closes the part of the spoke 10 which houses the electronic components 12 and 13.

The cover 17 extends radially between the collar 8 and the partition 16 across the full width of the spoke 10 in order to protect the electronic components 12 and 13.

Preferably, the cover 17 is sealed to the spoke 10, for example by means of resins, in order to protect the components 12 and 13.

In practice, the compartment 11 which houses the electronic components 12 and 13 is sealed also by the cover 17 so that the components are protected even in heavy-duty application.

Advantageously, the cover 17 is shaped to cover also the connecting cables 18 so that the latter, too, are hermetically protected.

The invention has important advantages.

The greater the power and size of the motor, the larger is the axial dimension of the collar which supports the motor.

Taking advantage of the axial length of the collar, it is possible to mount the capacitor, which is usually longer than it is wide, vertically, parallel to the axis of rotation, using the full axial length of the spoke in the vicinity of the collar. It should be noted that of all the components, the electrolytic capacitor is the one most sensitive to temperature and prone to deterioration in terms of durability and dependability and it is therefore advantageous for it to work at a low temperature.

The inductor has a highly resistive property and therefore tends to generate heat but, since it is mounted in the spoke, does not affect the temperature of the capacitor.

Since the capacitor and the inductor are mounted outside the motor, inside a spoke, they are exposed directly to external air and are not affected by the temperature inside the motor but, at the same time, do not disturb the air flow produced by the fan.

Inside the motor, the other power and signal components can be optimized because there is more space available for them even if the enclosure is smaller in size than in prior art solutions.

Moreover, the back of the motor, which acts as a heat sink, is also optimized for cooling the signal components and for the MOSFETs usually present in the electronic control system.

## Claims

1. A ventilation unit comprising
an axial fan (4) having an axis of rotation (R)
an electric motor (3) for driving the axial fan (4) and comprising a casing (5a), a cap (5b) coupled to the casing (5a) to form a sealed enclosure (5) and an electronic control system (6) at least partly housed in the enclosure (5) and comprising a plurality of electronic components (12, 13), the ventilation unit further comprising
a shroud (2) supporting the electric motor (3) and having an outer mounting frame (7), an inner collar (8) supporting the electric motor (3), a plurality of spokes (9, 10) for connecting the inner collar (8) to the outer frame (7), a first spoke (10) of the spokes (9, 10) comprising means (11, 15, 16) for housing a first electronic component (12) of the electronic components (12, 13), the first electronic component (12) being mounted in the housing means (11), the ventilation unit being **characterized in that** the housing means (11) comprise a compartment (11) located near the inner collar (8) and housing the first electronic component (12) in such a way that the main direction of extension of said electronic component (12) is parallel to the main direction of extension of the compartment (11) itself and said directions of extension are both parallel to the axis of rotation (R) and transversal to the main direction of extension of the spoke (10).

2. The ventilation unit according to claim 1, **characterized in that** the housing means (11, 15, 16) are formed in the first spoke (10).

3. The ventilation unit according to claim 1, **characterized in that** the compartment (11) is located in the vicinity of the inner collar (8).

4. The ventilation unit according to any of the claims from 1 to 3, **characterized in that** along the axis of rotation (R) the size of the compartment (11) is comparable to the size of the inner collar (8) along the same axis of rotation (R).

5. The ventilation unit according to any of the preceding claims, **characterized in that** the first electronic component (12) mounted in the housing means (11, 15, 16) is an electrolytic capacitor (12).

6. The ventilation unit according to claim 5, **characterized in that** the electrolytic capacitor (12) is mounted in the compartment (11), the electrolytic capacitor (12) and the compartment (11) each having a main direction of extension which is parallel to the axis of rotation (R).

7. The ventilation unit according to any of the claims from 1 to 4, **characterized in that** the first electronic component (13) is an inductor (13).

8. The ventilation unit according to claim 7, **characterized in that** the inductor (13) is mounted in the housing means in such a way that its main direction of extension is parallel to the main direction of extension of the first spoke (10).

9. The ventilation unit according to claim 8, **characterized in that** the first spoke (10) has a groove (15), the inductor (13) being mounted inside the groove (15).

10. The ventilation unit according to claim 1, **characterized in that** the first electronic component (12) is an electrolytic capacitor (12)mounted in the compartment (11) in such a way that its main direction of extension is parallel to the axis of rotation (R), the electronic system (6) comprising a second electronic component (13), being an inductor, mounted in the first spoke (10) in such a way that its main direction of extension is parallel to the main direction of extension of the first spoke (10).

11. The ventilation unit according to claim 1, **characterized in that** it comprises a cover (17) for closing the compartment (11), the compartment (11) being sealed by the cover (17).

12. A shroud comprising an outer mounting frame (7), an inner collar (8) for supporting an electric motor for driving a fan having an axis of rotation (R), a plurality of spokes (9, 10) for connecting the inner collar (7) to the outer frame (8), a first spoke (10) of the spokes (9, 10) comprising means (11, 15, 16) for housing at least one electronic component (12, 13) of an electronic control system (6) for the electric fan, the housing means (11, 15, 16) being formed in the first spoke (10), the shroud being **characterized in that** the housing means (11, 15, 16) comprise a compartment (11) for the electronic component (12, 13) extending mainly parallel to the axis of rotation (R).

13. The shroud according to claim 12, **characterized in that** the compartment (11) is located in the vicinity of the inner collar (8), extends mainly parallel to the axis of rotation (R) and, along the axis of rotation (R), its size is comparable to the size of the inner collar along the same axis of rotation (R).

## Patentansprüche

1. Lüftungseinheit, umfassend einen Axiallüfter (4), aufweisend eine Rotationsachse (R), einen Elektromotor (3) zum Antrieb des Axiallüfters (4), und umfassend ein Gehäuse (5a), eine Kappe (5b), die mit dem Gehäuse (5a) gekuppelt ist, um eine abgedichtete Umhausung (5) zu formen, und ein elektronisches Steuersystem (6), das zumindest teilweise in der Umhausung (5) untergebracht ist, und umfassend eine Vielzahl an elektronischen Komponenten (12, 13), wobei die Lüftungseinheit zudem ein Abdeckblech (2) umfasst, stützend den Elektromotor (3) und aufweisend einen äußeren Montagerahmen (7), eine innere Manschette (8), stützend den Elektromotor (3), eine Vielzahl an Speichen (9, 10) zum Verbinden der inneren Manschette (8) mit dem äußeren Rahmen (7), wobei eine erste Speiche (10) der Speichen (9, 10) Mittel (11, 15, 16) zum Unterbringen einer ersten elektronischen Komponente (12) der elektronischen Komponenten (12, 13) umfasst, wobei die erste elektronische Komponente (12) in den Unterbringungsmitteln (11) montiert ist, wobei die Lüftungseinheit **dadurch gekennzeichnet ist, dass** die Unterbringungsmittel (11) eine Unterteilung (11) umfassen, die in der Nähe der inneren Manschette (8) angeordnet ist und die erste elektronische Komponente (12) enthält, sodass die Hauptausdehnungsrichtung der elektronischen Komponente (12) parallel zur Hauptausdehnungsrichtung der Unterteilung (11) verläuft und die Ausdehnungsrichtungen beide parallel zur Rotationsachse (R) und quer zur Hauptausdehnungsrichtung der Speiche (10) verlaufen.

2. Lüftungseinheit nach Anspruch 1, **dadurch gekennzeichnet, dass** die Unterbringungsmittel (11, 15, 16) in der ersten Speiche (10) ausgebildet sind.

3. Lüftungseinheit nach Anspruch 1, **dadurch gekennzeichnet, dass** die Unterteilung (11) in der Nähe der inneren Manschette (8) angeordnet ist.

4. Lüftungseinheit nach einem der Ansprüche 1 bis 3, **dadurch gekennzeichnet ist, dass** die Größe der Unterteilung (11) entlang der Rotationsachse (R) mit der Größe der inneren Manschette (8) entlang der Rotationsachse (R) vergleichbar ist.

5. Lüftungseinheit nach einem der vorhergehenden Ansprüche, **dadurch gekennzeichnet, dass** die erste elektronische Komponente (12), die in den Unterbringungsmitteln (11, 15, 16) montiert ist, ein Elektrolytkondensator (12) ist.

6. Lüftungseinheit nach Anspruch 5, **dadurch gekennzeichnet, dass** der Elektrolytkondensator (12) in der Unterteilung (11) montiert ist, wobei der Elektrolytkondensator (12) und die Unterteilung (11) jeweils eine Hauptausdehnungsrichtung aufweisen, die parallel zur Rotationsachse (R) verläuft.

7. Lüftungseinheit nach einem der Ansprüche 1 bis 4, **dadurch gekennzeichnet, dass** die erste elektronische Komponente (13) ein Induktor (13) ist.

8. Lüftungseinheit nach Anspruch 7, **dadurch gekennzeichnet, dass** der Induktor (13) in den Unterbringungsmitteln so montiert ist, dass seine Hauptausdehnungsrichtung parallel zur Hauptausdehnungsrichtung der ersten Speiche (10) verläuft.

9. Lüftungseinheit nach Anspruch 8, **dadurch gekennzeichnet, dass** die erste Speiche (10) eine Nut (15) aufweist und der Induktor (13) in der Nut (15) montiert ist.

10. Lüftungseinheit nach Anspruch 1, **dadurch gekennzeichnet, dass** die erste elektronische Komponente (12) ein Elektrolytkondensator (12) ist, montiert in der Unterteilung (11), sodass seine Hauptausdehnungsrichtung parallel zur Rotationsachse (R) verläuft, wobei das elektronische System (6) eine zweite elektronische Komponente (13) umfasst, bei der es sich um einen Induktor handelt, montiert in der ersten Speiche (10), sodass dessen Hauptausdehnungsrichtung parallel zur Hauptausdehnungsrichtung der ersten Speiche (10) verläuft.

11. Lüftungseinheit nach Anspruch 1, **dadurch gekennzeichnet, dass** sie eine Abdeckung (17) umfasst, um die Unterteilung (11) zu verschließen, wobei die Unterteilung (11) durch die Abdeckung (17) versiegelt wird.

12. Abdeckblech, umfassend einen äußeren Montagerahmen (7), eine innere Manschette (8) zum Stützen eines Elektromotors für den Antrieb eines Lüfters, aufweisend eine Rotationsachse (R), eine Vielzahl an Speichen (9, 10) zum Verbinden der inneren Manschette (7) mit dem äußeren Rahmen (8), wobei eine erste Speiche (10) der Speichen (9, 10) Mittel (11, 15, 16) zum Unterbringen von mindestens einer elektronischen Komponente (12, 13) eines elektronischen Steuerungssystems (6) für den Elektrolüfter umfasst, wobei die Unterbringungsmittel (11, 15, 16) in der ersten Speiche (10) ausgebildet sind, wobei das Abdeckblech **dadurch gekennzeichnet ist, dass** die Unterbringungsmittel (11, 15, 16) eine Unterteilung (11) für die elektronische Komponente (12, 13) umfassen, die sich vorwiegend parallel zur Rotationsachse (R) erstreckt.

13. Abdeckblech nach Anspruch 12, **dadurch gekennzeichnet ist, dass** die Unterteilung (11) in der Nähe der inneren Manschette (8) angeordnet ist und sich vorwiegend parallel zur Rotationsachse (R) erstreckt, wobei ihre Größe entlang der Rotationsachse (R) vergleichbar mit der Größe der inneren Manschette entlang der Rotationsachse (R) ist.

## Revendications

1. Unité de ventilation comprenant un ventilateur axial (4) comportant un axe de rotation (R), un moteur électrique (3) pour entraîner le ventilateur axial (4) et comprenant une carcasse (5a), un couvercle (5b) couplé à la carcasse (5a) pour former une enveloppe étanche (5) et un système de commande électronique (6) au moins logé partiellement dans l'enveloppe (5) et comprenant une pluralité de composants électroniques (12, 13), l'unité de ventilation comprenant de plus un déflecteur (2) supportant le moteur électrique (3) et comportant un cadre de support externe (7), une bague interne (8) supportant le moteur électrique (3), une pluralité de rayons (9, 10) servant à relier la bague interne (8) au cadre externe (7), un premier rayon (10) des rayons (9, 10) comprenant des moyens (11, 15, 16) servant à loger un premier composant électronique (12) des composants électroniques (12, 13), le premier composant électronique (12) étant monté dans les moyens de logement (11), l'unité de ventilation étant **caractérisée en ce que** les moyens de logement (11) comprennent un compartiment (11) situé à proximité de la bague interne (8) et logeant le premier composant électronique (12) de sorte que la direction principale d'extension dudit composant électronique (12) est parallèle à la direction principale d'extension du compartiment (11) lui-même et lesdites directions d'extension sont toutes deux parallèles à l'axe de rotation (R) et transversales à la direction principale d'extension du rayon (10).

2. Unité de ventilation selon la revendication 1, **caractérisée en ce que** les moyens de logement (11, 15, 16) sont formés dans le premier rayon (10).

3. Unité de ventilation selon la revendication 1, **caractérisée en ce que** le compartiment (11) est situé à proximité de la bague interne (8).

4. Unité de ventilation selon l'une quelconque des revendications 1 à 3, **caractérisée en ce que** le long de l'axe de rotation (R), la dimension du compartiment (11) est comparable à la dimension de la bague interne (8) le long du même axe de rotation (R).

5. Unité de ventilation selon l'une quelconque des revendications précédentes, **caractérisée en ce que** le premier composant électronique (12) monté dans les moyens de logement (11, 15, 16) est un condensateur électrolytique (12).

6. Unité de ventilation selon la revendication 5, **caractérisée en ce que** le condensateur électrolytique (12) est monté dans le compartiment (11), le condensateur électrolytique (12) et le compartiment (11) comportant chacun une direction principale d'extension étant parallèle à l'axe de rotation (R).

7. Unité de ventilation selon l'une quelconque des revendications 1 à 4, **caractérisée en ce que** le premier composant électronique (13) est une bobine inductrice (13).

8. Unité de ventilation selon la revendication 7, **caractérisée en ce que** la bobine inductrice (13) est montée dans les moyens de logement de sorte que sa direction principale d'extension soit parallèle à la direction principale d'extension du premier rayon (10).

9. Unité de ventilation selon la revendication 8, **caractérisée en ce que** le premier rayon (10) comporte une rainure (15), la bobine inductrice (13) étant montée à l'intérieur de la rainure (15).

10. Unité de ventilation selon la revendication 1, **caractérisée en ce que** le premier composant électronique (12) est un condensateur électrolytique (12) monté dans le compartiment (11) de sorte que sa direction principale d'extension soit parallèle à l'axe de rotation (R), le système électronique (6) comprenant un second composant électronique (13), étant une bobine inductrice, monté dans le premier rayon (10) de manière à ce que sa direction principale d'extension soit parallèle à la direction principale d'extension du premier rayon (10).

11. Unité de ventilation selon la revendication 1, **caractérisée en ce qu'**elle comprend un couvercle (17) pour fermer le compartiment (11), le compartiment (11) étant rendu étanche par le couvercle (17).

12. Déflecteur comprenant un cadre de support externe (7), une bague interne (8) pour supporter un moteur électrique pour entraîner un ventilateur ayant un axe de rotation (R), une pluralité de rayons (9, 10) pour relier la bague interne (7) au cadre externe (8), un premier rayon (10) des rayons (9, 10) comprenant des moyens (11, 15, 16) pour loger au moins un composant électronique (12, 13) d'un système de commande électronique (6) pour le ventilateur électrique, les moyens de logement (11, 15, 16) étant formés dans le premier rayon (10), le déflecteur étant **caractérisé en ce que** les moyens de logement (11, 15, 16) comprennent un compartiment (11) pour le composant électronique (12, 13) se prolongeant principalement de façon parallèle à l'axe de rotation (R).

13. Déflecteur selon la revendication 12, **caractérisé en ce que** le compartiment (11) est situé à proximité de la bague interne (8), se prolonge principalement de façon parallèle à l'axe de rotation (R) et, le long de l'axe de rotation (R), sa dimension est comparable à la dimension de la bague interne le long du même axe de rotation (R).
